# EUROPEAN PATENT SPECIFICATION

(11) **EP 2 267 340 B1**
(45) Date of publication and mention of the grant of the patent: **26.03.2014**
(21) Application number: 10165370.7
(22) Date of filing: 09.06.2010
(51) Int. Cl.: F16J 15/32, F16J 15/34, F16J 15/36, A23G 9/04, A23G 9/22

(54) **Sealing device for crushed-ice drink makers**
Abdichtvorrichtung für Getränkehersteller mit zerstoßenem Eis
Dispositif d'étanchéité pour appareils de fabrication de boissons à base de glace pilée

(30) Priority: 25.06.2009 IT BO20090413
(43) Date of publication of application: 29.12.2010
(73) Proprietor: Carpigiani Group - ALI S.p.A., 40011 Anzola Dell'Emilia (BO) (IT)
(72) Inventor: Escriva Estruch, Vicente, 40011 Anzola dell'Emilia (Bologna) (IT); Cocchi, Gino, 40011 Anzola dell'Emilia (Bologna) (IT)
(74) Representative: Bianciardi, Ezio

(56) References cited:
- EP-A1- 1 808 622
- GB-A- 593 271
- JP-A- 4 169 154
- US-A- 4 968 044

## Description

This invention relates to a sealing device for crushed-ice drink makers.

More specifically, the sealing device is of the type which can be applied to crushed-ice drink makers where the shaft that drives the mixing screw protrudes from an evaporator cylinder. The sealing device is of the type which can be applied at the joint between the evaporator cylinder and the protruding portion of the shaft. The purpose of the sealing device is therefore to prevent the drink contained in the crushed-ice drink maker from leaking out from between the shaft and the evaporator cylinder and finding its way into the evaporator cylinder.

A prior art sealing device is described in European patent application EP1808622. That sealing device comprises an inner element of Teflon fitted to the shaft and abutting against the front surface of the evaporator cylinder, and an outer elastic element which covers the inner element and which, on the side opposite the inner element, abuts against a bearing rotatable as one with the shaft and connected to the mixing screw. The outer elastic seal also abuts against the front surface of the evaporator cylinder and further comprises an inner projection that comes into contact with the inner element and which, in conjunction with the outside surface of the inner element, creates a fluid-tight seal towards the shaft.

Disadvantageously, a sealing device of this type is not very effective since the inner element is integral with the shaft and thus made to rotate relative to the evaporator cylinder. This leads to excessive wear on the inner element and easily results in leaking of the drink towards the inside of the evaporator cylinder.

Such leaking eventually causes damage to the cooling components built into the evaporator cylinder and to the shaft drive motor, creating a high risk of short circuits.

In this context, the technical purpose which forms the basis of the present invention is to propose a sealing device for crushed-ice drink makers which overcomes the above mentioned disadvantages of the prior art.

More specifically, this invention has for an aim to provide a sealing device for crushed-ice drink makers which has a high sealing effectiveness. Another aim of the invention is to provide a sealing device for crushed-ice drink makers offering a high level of reliability over time.

The technical purpose indicated and the aims specified are substantially achieved by a sealing device for crushed-ice drink makers comprising the technical features described in one or more of the appended claims.

Further features and advantages of this invention are more apparent in the detailed description below, with reference to a preferred, non-limiting embodiment of a sealing device for crushed-ice drink makers, illustrated in the accompanying drawings, in which:

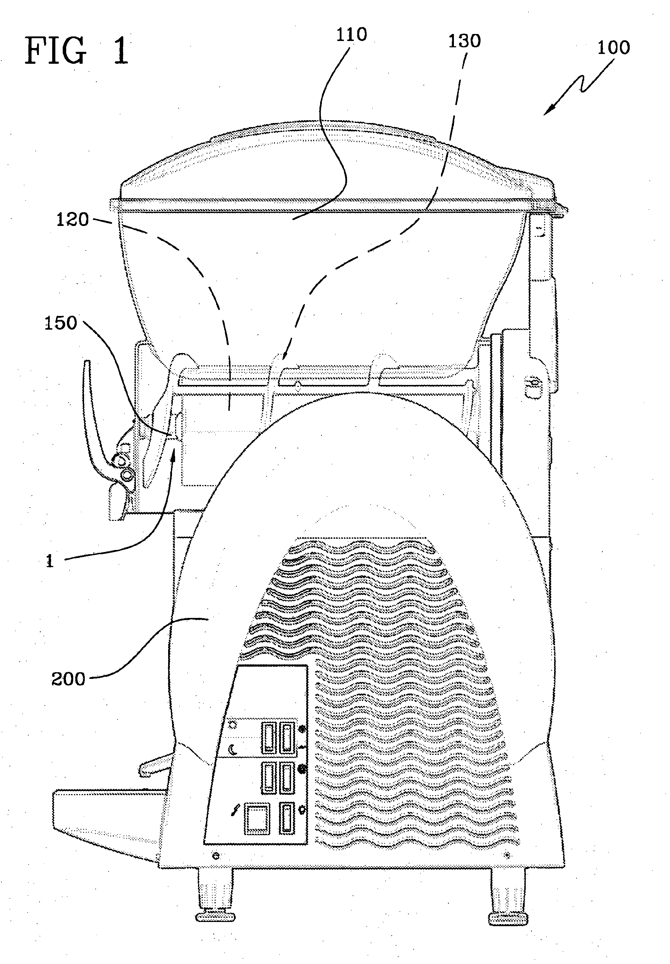

- Figure 1 is a crushed-ice drink maker fitted with a sealing device according to this invention;
- Figure 2 shows a sealing device according to the invention in a cross section along a plane through the axis of rotation of the mixing screw;
- Figure 3 is a perspective view of a portion of the crushed-ice drink maker of Figure 1 with some parts cut away in order to better illustrate the sealing device according to the invention;
- Figure 4 is a perspective view, partly in cross section, of the portion of the crushed-ice drink maker of Figure 3;
- Figure 5 is a perspective exploded view of a sealing device according to the invention.

With reference to the accompanying drawings, the numeral 100 denotes in its entirety a crushed-ice drink maker, that is to say, a machine for dispensing iced drinks or the like, made from water or milk with added flavourings.

The crushed-ice drink maker 100, having an essentially known structure, comprises a tank 110 for containing an iced drink, and an evaporator cylinder 120 located inside the tank 110 for cooling the drink and keep it at a preset temperature.

Under the tank 110 there is a base 200 comprising adjustment means and/or a cooling system of customary type.

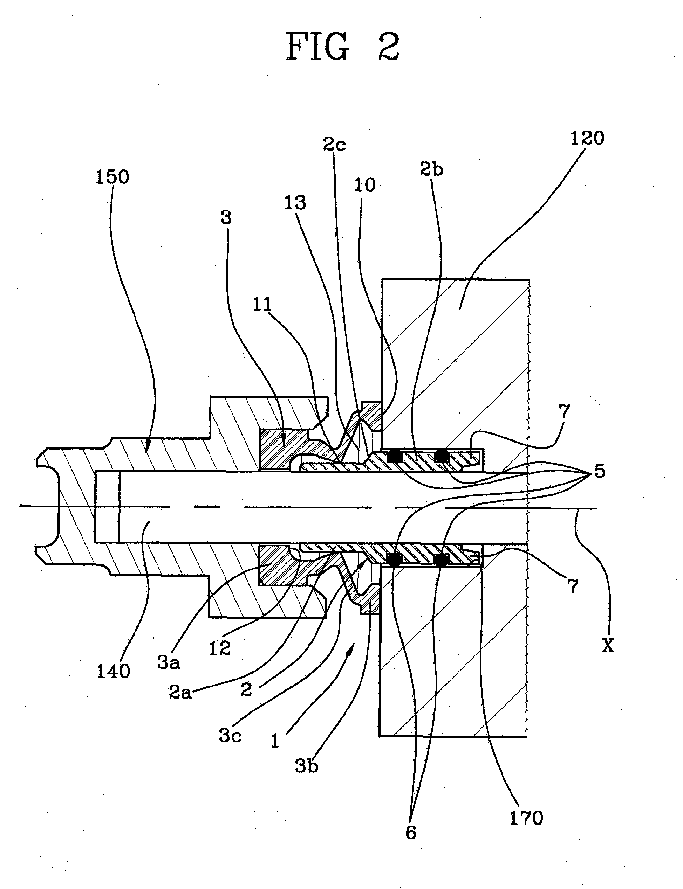

Around the evaporator cylinder 120 is rotatably mounted a mixing and/or scraping screw 130 which is rotationally driven by a shaft 140 about a horizontal axis X (Figure 2) The shaft 140 protrudes partially from the evaporator cylinder 120 and causes the screw 130 to rotate about the axis X through a bearing 150.

The bearing 150 is rotatably fitted in a suitable housing made in the wall of the tank 110 for providing support for the shaft 140.

Figure 2 illustrates in detail the rotary joint between the between the bearing 150 and the evaporator cylinder 120.

The bearing 150, which rotates as one with the shaft 140, is fitted on the free end of the shaft 140, protruding from the evaporator cylinder 120, with the possibility of relative rotation.

The crushed-ice drink maker 100 comprises a sealing device 1 interposed between the bearing 150 and the evaporator cylinder 120 and operates at least between the evaporator cylinder 120 and the shaft 140 to prevent the drink from leaking between the evaporator cylinder 120 and the shaft 140 towards the inside of the evaporator cylinder 120.

Looking in more detail, the sealing device 1 according to this invention comprises an inner element 2 and an outer element 3.

The inner element 2 is made of an anti-friction material, preferably rigid, for example Teflon.

The inner element comprises a first portion 2a and a second portion 2b, integral and consecutive with each other and preferably axisymmetric about the same axis. The second portion 2b is stably inserted in a respective hole 170 made in the front wall 160 of the evaporator cylinder 120, in such a way that the axis about which the two portions 2a, 2b of the inner element 2 rotate coincides with the axis of rotation "X" of the mixing screw 130 and of the shaft 140.

The inner element 2 also comprises an internal through hole 4 extending between the first and second portions 2a, 2b to allow insertion of the shaft 140, that is to say, to allow the inner element 2 to be fitted on the portion of the shaft 140 that protrudes outwards from the evaporator cylinder 120, coaxially with the shaft 140 itself. Preferably, the cylindrical outside surfaces of the two portions 2a, 2b of the inner element have circular cross sections that differ in diameter. More specifically, the outside surface of the first portion 2a is smaller in diameter than the second portion. The two outside surfaces of the two portions 2a, 2b are joined to each other by a connecting portion 2c, preferably having the shape of a truncated cone.

The second portion 2b of the inner element has, on its outside surface, at least one annular groove 5 for stably accommodating a sealing ring 6. The sealing ring 6 acts in conjunction with the hole 170 in the front wall 160 of the evaporator cylinder 120 to create a fluid-tight seal between the inside and the outside of the evaporator cylinder 120.

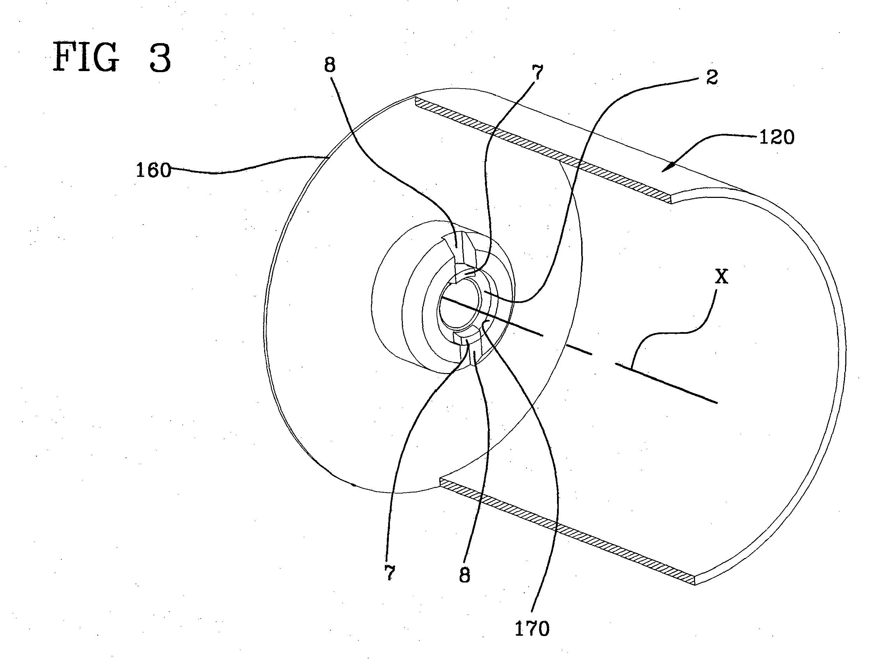

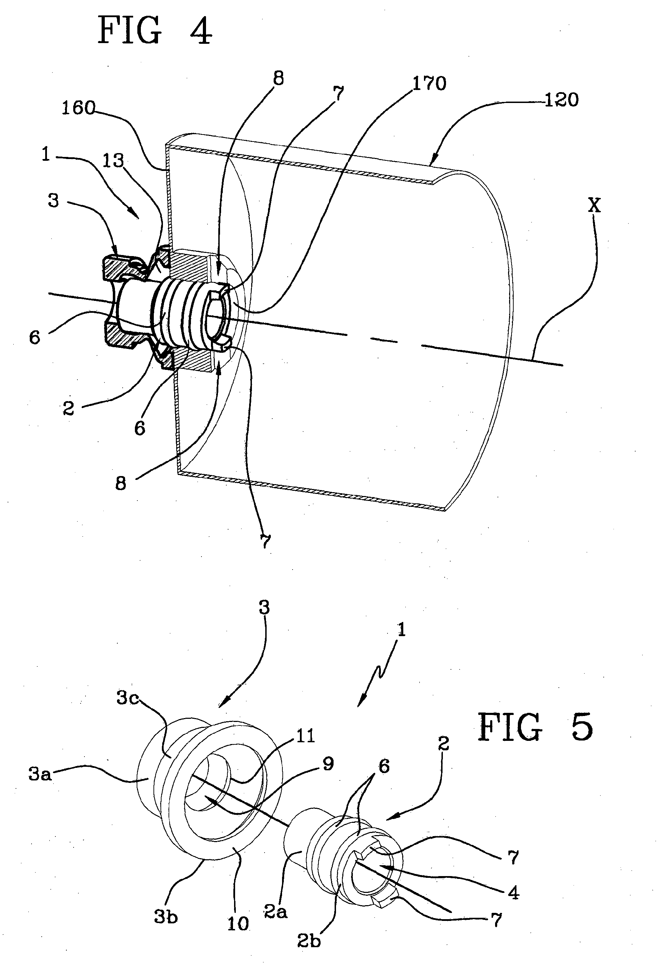

Preferably, the inner element 2 has a plurality of consecutive annular grooves 5 for accommodating an equal number of sealing rings 6 (in the embodiment illustrated, two sealing rings are shown). Advantageously, the inner element 2 comprises locking means which can stably engage with the evaporator cylinder 120 to prevent rotation of the inner element 2 relative to the hole 170 it is inserted in. In the preferred embodiment of the invention illustrated, the locking means comprise at least one longitudinal projection 7 fixed to the second portion 2b of the inner element 2 and able to engage in a respective recess 8 in the hole 170 of the evaporator cylinder 120 (Figures 3 and 4). The longitudinal protrusion 7 is eccentric relative to the axis X. Inserting the projection into the hole 170 in the evaporator cylinder 120 stops the inner element 2 from rotating.

In the preferred embodiment of the invention illustrated, the inner element 2 has two diametrically opposite projections 7 which can engage in diametrically opposite recesses 8 in the hole 170 of the evaporator cylinder 120 (Figures 3 and 4).

The outer element 3 is positioned around the inner element 2, the outside surface of the former being suitable for direct contact with the drink contained in the tank 110.

The outer element 3 is preferably made of a deformable material and, still more preferably, is made of a silicone material.

The outer element 3 is preferably axisymmetric about the axis X and has a first portion 3a with a through hole 9 in it for inserting the shaft 140 and a second portion 3b abutting against the front wall 160 of the evaporator cylinder 120.

The two portions 3a, 3b preferably differ in diameter relative to the axis X and are joined to each other by a connecting portion 3c designed to be deformed when the outer element 3 is placed in working position. Preferably, the first portion 3a of the outer element 3 is smaller in diameter than the second portion 3b.

The outer element 3 is substantially in the shape of suction cup designed to adhere in fluid-tight fashion to the front wall 160 of the evaporator cylinder 120.

The first portion 3a of the outer element 3 is adapted to be positioned in abutment against the bearing 150, preferably by insertion into a longitudinal recess in the bearing 150. The second portion 3b of the outer element 3, on the other hand, has a flat, annular surface 10 abuttable against the above mentioned front wall 160 of the evaporator cylinder 120. The second portion 3b of the outer element 3 is held pressed against the front wall 160 of the evaporator cylinder 120 by elastic reaction of the connecting portion 3c of the outer element 3, which is deformed by flattening during assembly of the sealing device 1. The first portion 3a and the second portion 3b of the outer element 3 are axially offset relative to the axis X in such a way that, during assembly of the sealing device 1, the first portion 3a is pushed against the second portion 3b and thus against the front wall 160 of the evaporator cylinder 120. The result is an elastic deformation of the connecting portion 3c of the outer element 3 which keeps the flat surface 10 pressed against the front wall 160 of the evaporator cylinder 120.

The outer element 3 has a hollow shape so it can contain and surround at least the first portion 2a of the inner element 2. Preferably, the outer element 3 has an inner protuberance 11 designed to engage, by elastic locking, with the first portion 2a of the inner element 2. The elastic locking action is sufficient to create a fluid-tight section and to allow the inner element 2 and the outer element 3 to slide reciprocally against each other (by reciprocal rotation).

The inner protuberance 11 forms a circular opening which, in the rest position, is preferably smaller in diameter than the outside surface of the first portion 2a of the inner element 2. In other words, the first portion 2a of the inner element 2 can be forcibly pressed into the opening formed by the inner protuberance 11, if necessary until abutting against an end shoulder 12 of the first portion 3a of the outer element 3.

In use, the sealing device 1 adopts a configuration illustrated clearly in Figures 2 and 4. In this configuration the second portion 3b of the outer element 3 forms, in conjunction with the front wall 160 of the evaporator cylinder 120, a dynamic fluid-tight seal for preventing the drink in the tank 110 from reaching the inner element 2 and finding its way from there to the inside of the evaporator cylinder 120. The seal created by the outer element 3 is dynamic in that the evaporator cylinder 120 is stationary while the outer element 3 is integral with the shaft 140 and bearing 150 and thus rotates as one with them about the axis X. As the mixing screw 130 rotates, the flat surface 10 of the outer element 3 slides on the front wall 160 of the evaporator cylinder 120.

The second portion 2b of the inner element 2, on the other hand, forms a static fluid-tight seal, since the inner element 2 rotates as one with the evaporator cylinder 120, and is held still by the longitudinal projections 7 which slot into the recesses 8 in the hole 170 of the evaporator cylinder 120.

Between the outer element 3, the inner element 2 and the front wall 160 of the evaporator cylinder an annular sealed chamber 13 is created which extends about the axis X and which separates the interior of the tank 110 containing the drink from the interior of the evaporator cylinder 120.

The invention achieves the preset aims and overcomes the above mentioned disadvantages of the prior art.

The sealing device provides a two-stage seal, dynamic on the outermost side, directed towards the tank, and static on the innermost side, directed towards the evaporator cylinder. The effectiveness of the sealing action is thus very high and successfully prevents leaking of the drink between the shaft and the evaporator cylinder.

Further, the fact that the inner element is locked to, and hence integral with, the evaporator cylinder, virtually eliminates wear on these parts, even after prolonged use, thus significantly increasing the reliability and working life of the sealing device.

## Claims

1. A sealing device for crushed-ice drink makers, comprising an outer sealing element (3) having first sealing means (3b) able to engage with a front wall (160) of a crushed-ice drink maker (100) evaporator cylinder (120), creating, in conjunction with the front wall (160), a first fluid-tight seal; **characterized in that** it also comprises an inner sealing element (2), able to connect to the outer element (3) and which can be at least partly inserted in a hole (170) in the front wall (160), the outside of the inner element (2) having second sealing means (6) able to engage with the hole (170), creating, in conjunction with an inner wall of the hole (170), a second fluid-tight seal; the inner element (2) being at least partly inserted in the outer element (3) and the outer element (3) being shaped in such a way that it is positioned outside the inner element (2), the reciprocal connection between the outer and inner elements (3, 2) being a fluid-tight connection.

2. The device according to claim 1, wherein the inner sealing element (2) comprises at least one cylindrical portion (2b) which can be inserted in the hole (170) in the evaporator cylinder (120), said portion having locking means (7) which can stably engage with the evaporator cylinder (120) to prevent rotation of the inner element (2) inside the hole (170) in the evaporator cylinder (120).

3. The device according to claim 2, wherein the locking means comprise at least one projection (7) fastened to the cylindrical portion (2b) and extending away from the cylindrical portion (2b), preferably in a direction parallel with a direction for insertion of the inner element (2) in the hole (170).

4. The device according to claim 3, wherein the cylindrical portion (2b) is substantially axisymmetric about an axis (X), the projection (7) being eccentric relative to the axis (X).

5. The device according to any of the claims from 2 to 4, wherein the cylindrical portion (2b) of the inner element comprises at least one annular groove equipped with a sealing ring for creating a fluid-tight seal between the cylindrical portion and the hole in the front wall of the evaporator cylinder.

6. The device according to any of the claims from 2 to 5, wherein the inner element (2) also comprises a connecting portion (2a), coaxial with the cylindrical portion (2b), and wherein the outer element (3) comprises an elastically deformable annular inner protuberance (11) for stably holding in a sealed fashion the connecting portion (2c) of the inner element (2)

7. A crushed-ice drink maker, comprising:
- a tank (110) for containing an iced drink;
- an evaporator cylinder (120) located inside the tank (110);
- a shaft (140) for driving a mixing screw (130), the shaft (140) having a portion which protrudes from the evaporator cylinder (120) at a front wall (160) of the evaporator cylinder (120);
- a sealing device (1) according to any of the foregoing claims, wherein the inner and outer elements (2, 3) are fitted on the protruding portion of the shaft (140) and wherein the inner element (2) is inserted in a hole (170) in the front wall (160), creating the second fluid-tight seal and the outer element (3) surrounds the outside of the inner element (2) and comprises a sealing portion (3b) abutting against the front wall (160) to create the first fluid-tight seal.

8. The crushed-ice drink maker according to claim 7, wherein the inner element (2) is stably inserted non-rotatably in the hole (170) in the front wall (160) of the evaporator cylinder (120) and creates a second, static fluid-tight seal, whilst the outer element (3), in conjunction with the front wall (160), creates a first, dynamic fluid-tight seal.

9. The crushed-ice drink maker according to claim 7 or 8, wherein the inner element (2) comprises a connecting portion (2a) which can be connected in a sealed fashion to the outer element (3), and a cylindrical portion (2b) inserted in the hole (170), the crushed-ice drink maker (1) also comprising at least one seal (6) operating in the hole (170) and interposed between the cylindrical portion (2b) of the inner element (2) and the evaporator cylinder (120) to create the second fluid-tight seal.

10. The crushed-ice drink maker according to claim 9, wherein the inner and outer elements (2, 3) and the front wall (160) in conjunction with each other delimit a sealed chamber (13) having an annular shape and extending about the axis (X) of rotation of the shaft (140), the chamber (13) being interposed between the tank (110) and a space inside the evaporator cylinder (120).

11. The crushed-ice drink maker according to claim 10, wherein the outer element (3) comprises an elastically deformable annular inner protuberance (11) for stably holding in a sealed fashion the connecting portion (2a) of the inner element (2).

## Patentansprüche

1. Abdichtvorrichtung für Zubereiter von Getränken aus zerstoßenem Eis, umfassend ein äußeres Abdichtungselement (3), aufweisend erste Abdichtungsmittel (3b), die dazu fähig sind, in eine Stirnwand (160) eines Verdampferzylinders (120) eines Zubereiters (100) von Getränken aus zerstoßenem Eis einzugreifen, wodurch gemeinsam mit der Stirnwand (160) eine erste, fluiddichte Abdichtung gebildet wird; **dadurch gekennzeichnet, dass** sie ferner ein inneres Abdichtungselement (2) umfasst, das dazu fähig ist, mit dem äußeren Element (3) verbunden zu sein und das zumindest teilweise in ein Loch (170) in der Stirnwand (160) eingeführt sein kann, wobei die Außenseite des inneren Elements (2) zweite Abdichtungsmittel (6) aufweist, die dazu fähig sind, in das Loch (170) einzugreifen und gemeinsam mit einer Innenwand des Lochs (170) eine zweite fluiddichte Abdichtung zu bilden; wobei das innere Element (2) zumindest teilweise in das äußere Element (3) eingeführt ist und das äußere Element (3) derart gestaltet ist, dass es außerhalb des inneren Elements (2) positioniert ist, wobei die reziproke Verbindung zwischen dem äußeren und dem inneren Element (3, 2) eine fluiddichte Verbindung ist.

2. Vorrichtung nach Anspruch 1, wobei das innere Abdichtungselement (2) mindestens einen zylindrischen Abschnitt (2b) umfasst, der in das Loch (170) im Verdampferzylinder (120) eingeführt sein kann, wobei der Abschnitt Verschlussmittel (7) aufweist, die stabil in den Verdampferzylinder (120) eingreifen können, um eine Drehung des inneren Elements (2) innerhalb des Lochs (170) im Verdampferzylinder (120) zu verhindern.

3. Vorrichtung nach Anspruch 2, wobei die Verschlussmittel mindestens einen Vorsprung (7) umfassen, der am zylindrischen Abschnitt (2b) befestigt ist und sich vom zylindrischen Abschnitt (2b) weg erstreckt, vorzugsweise in eine Richtung, die parallel zu einer Richtung zum Einführen des inneren Elements (2) in das Loch (170) ist.

4. Vorrichtung nach Anspruch 3, wobei der zylindrische Abschnitt (2b) im Wesentlichen axialsymmetrisch zur Achse (X) ist, wobei der Vorsprung (7) relativ zur Achse (X) außermittig ist.

5. Vorrichtung nach einem der Ansprüche 2 bis 4, wobei der zylindrische Abschnitt (2b) des inneren Elements mindestens eine ringförmige Nut umfasst, die mit einem Abdichtungsring zur Bildung einer fluiddichten Abdichtung zwischen dem zylindrischen Abschnitt und dem Loch in der Stirnwand des Verdampferzylinders ausgestattet ist.

6. Vorrichtung nach einem der Ansprüche 2 bis 5, wobei das innere Element (2) ferner einen Verbindungsabschnitt (2a) umfasst, der koaxial zum zylindrischen Abschnitt (2b) ist, und wobei das äußere Element (3) eine elastisch verformbare, ringförmige, innere Auskragung (11) zum stabilen Halten des Verbindungsabschnitts (2c) des inneren Elements (2) in einer abgedichteten Weise umfasst.

7. Zubereiter von Getränken aus zerstoßenem Eis, umfassend:
- einen Tank (110) zur Aufnahme eines Eisgetränks;
- einen Verdampferzylinder (120), der sich innerhalb des Tanks (110) befindet;
- eine Welle (140) zum Antrieb einer Mischschnecke (130), wobei die Welle (140) einen Abschnitt aufweist, der aus dem Verdampferzylinder (120) an einer Stirnwand (160) des Verdampferzylinders (120) auskragt;
- eine Abdichtungsvorrichtung (1) nach einem der vorangehenden Ansprüche, wobei das innere und das äußere Element (2, 3) auf den auskragenden Abschnitt der Welle (140) aufgesetzt sind und wobei das innere Element (2) in ein Loch (170) in der Stirnwand (160) eingeführt ist, wodurch die zweite fluiddichte Abdichtung gebildet wird und das äußere Element (3) die Außenseite des inneren Elements (2) umgibt und einen Abdichtungsabschnitt (3b) umfasst, der an der Stirnwand (160) anschlägt, um die erste fluiddichte Abdichtung zu bilden.

8. Zubereiter von Getränken aus zerstoßenem Eis nach Anspruch 7, wobei das innere Element (2) stabil und nicht-drehbar in das Loch (170) in der Stirnwand (160) des Verdampferzylinders (120) eingeführt ist und eine zweite, statische und fluiddichte Abdichtung bildet, während das äußere Element (3) gemeinsam mit der Stirnwand (160) eine erste, dynamische und fluiddichte Abdichtung bildet.

9. Zubereiter von Getränken aus zerstoßenem Eis nach Anspruch 7 oder 8, wobei das innere Element (2) einen Verbindungsabschnitt (2a) umfasst, der in einer abgedichteten Weise mit dem äußeren Element (3) verbunden sein kann, und einen zylindrischen Abschnitt (2b), der in das Loch (170) eingeführt ist, wobei der Zubereiter (1) von Getränken aus zerstoßenem Eis ferner mindestens eine Abdichtung (6) umfasst, die im Loch (170) wirkt und zwischen dem zylindrischen Abschnitt (2b) des inneren Elements (2) und dem Verdampferzylinder (120) liegt, um die zweite fluiddichte Abdichtung zu bilden.

10. Zubereiter von Getränken aus zerstoßenem Eis nach Anspruch 9, wobei das innere und äußere Element (2, 3) und die Stirnwand (160) gemeinsam miteinander eine abgedichtete Kammer (13) begrenzen, die eine ringförmige Gestalt aufweist und sich um die Drehachse (X) der Welle (140) herum erstreckt, wobei die Kammer (13) zwischen dem Tank (110) und einem Raum innerhalb des Verdampferzylinders (120) liegt.

11. Zubereiter von Getränken aus zerstoßenem Eis nach Anspruch 10, wobei das äußere Element (3) eine elastisch verformbare, ringförmige, innere Auskragung (11) zum stabilen Halten des Verbindungsabschnitts (2a) des inneren Elements (2) in einer abgedichteten Weise umfasst.

## Revendications

1. Dispositif d'étanchéité pour appareils de fabrication de boissons à base de glace pilée, comprenant un élément d'étanchéité externe (3) disposant de premiers moyens d'étanchéité (3b) aptes à se mettre en prise avec une paroi antérieure (160) d'un cylindre d'évaporation (120) d'un appareil de fabrication de boissons à base de glace pilée (100), créant, conjointement avec la paroi antérieure (160), une première garniture d'étanchéité ; **caractérisé en ce qu'**il comprend aussi un élément d'étanchéité interne (2), apte à se raccorder à l'élément externe (3) et qui peut être au moins en partie inséré dans un orifice (170) dans la paroi antérieure (160), l'extérieur de l'élément interne (2) disposant de seconds moyens d'étanchéité (6) aptes à se mettre en prise avec l'orifice (170), créant, conjointement avec une paroi interne de l'orifice (170), une seconde garniture d'étanchéité ; l'élément interne (2) étant au moins en partie inséré dans l'élément externe (3) et l'élément externe (3) ayant une forme qui lui permette d'être positionné à l'extérieur de l'élément interne (2), la liaison réciproque entre les éléments externe et interne (3, 2) étant une liaison étanche.

2. Dispositif selon la revendication 1, dans lequel l'élément d'étanchéité interne (2) comprend au moins une partie cylindrique (2b) pouvant être insérée dans l'orifice (170) dans le cylindre d'évaporation (120), ladite partie ayant des moyens de verrouillage (7) pouvant se mettre en prise solidement avec le cylindre d'évaporation (120) pour empêcher la rotation de l'élément interne (2) à l'intérieur de l'orifice (170) dans le cylindre d'évaporation (120).

3. Dispositif selon la revendication 2, dans lequel les moyens de verrouillage comprennent au moins une saillie (7) attachée à la partie cylindrique (2b) et se développant à partir de la partie cylindrique (2b), de préférence dans une direction parallèle à une direction destinée à l'insertion de l'élément interne (2) dans l'orifice (170).

4. Dispositif selon la revendication 3, dans lequel la partie cylindrique (2b) est substantiellement axisymétrique par rapport à un axe (X), la saillie (7) étant excentrique par rapport à l'axe (X).

5. Dispositif selon l'une quelconque des revendications de 2 à 4, dans lequel la partie cylindrique (2b) de l'élément interne comprend au moins une rainure annulaire dotée d'un joint d'étanchéité afin de créer une garniture d'étanchéité entre la partie cylindrique et l'orifice dans la paroi antérieure du cylindre d'évaporation.

6. Dispositif selon l'une quelconque des revendications de 2 à 5, dans lequel l'élément interne (2) comprend de plus une partie de liaison (2a), coaxiale à la partie cylindrique (2b), et dans lequel l'élément externe (3) comprend une saillie annulaire interne déformable élastiquement (11) permettant de maintenir solidement de façon étanche la partie de liaison (2c) de l'élément interne (2).

7. Appareil de fabrication de boissons à base de glace pilée, comprenant :
- un réservoir (110) servant à contenir la boisson frappée ;
un cylindre d'évaporation (120) situé à l'intérieur du réservoir (110) ;
- un arbre (140) servant à entraîner une vis de mélange (130), l'arbre (140) disposant d'une partie qui dépasse du cylindre d'évaporation (120) au niveau d'une paroi antérieure (160) du cylindre d'évaporation (120) ;
un dispositif d'étanchéité (1) selon l'une quelconque des revendications précédentes, dans lequel les éléments interne et externe (2, 3) sont positionnés sur la partie saillante de l'arbre (140) et dans lequel l'élément interne (2) est inséré dans un orifice (170) dans la paroi antérieure (160), créant la seconde garniture d'étanchéité et l'élément externe (3) entoure l'extérieur de l'élément interne (2) et comprend une partie d'étanchéité (3b) en butée contre la paroi antérieure (160) pour créer la première garniture d'étanchéité.

8. Appareil de fabrication de boissons à base de glace pilée selon la revendication 7,
dans lequel l'élément interne (2) est inséré solidement de façon non rotative dans l'orifice (170) dans la paroi antérieure (160) du cylindre d'évaporation (120) et crée une seconde garniture d'étanchéité statique, tandis que l'élément externe (3), conjointement à la paroi antérieure (160), crée une première garniture d'étanchéité dynamique.

9. Appareil de fabrication de boissons à base de glace pilée selon les revendications 7 ou 8, dans lequel l'élément interne (2) comprend une partie de liaison (2a) pouvant être reliée de façon étanche à l'élément externe (3), et une partie cylindrique (2b) insérée dans l'orifice (170), l'appareil de fabrication de boissons à base de glace pilée (1) comprenant de plus au moins un joint (6) opérant dans l'orifice (170) et interposé entre la partie cylindrique (2b) de l'élément interne (2) et le cylindre d'évaporation (120) pour créer la seconde garniture d'étanchéité.

10. Appareil de fabrication de boissons à base de glace pilée selon la revendication 9,
dans lequel les éléments interne et externe (2, 3) et la paroi antérieure (160) délimitent conjointement, les uns les autres, une chambre hermétique (13) ayant une forme annulaire et se développant autour de l'axe (X) de rotation de l'arbre (140), la chambre (13) étant interposée entre le réservoir (110) et un espace à l'intérieur du cylindre d'évaporation (120).

11. Appareil de fabrication de boissons à base de glace pilée selon la revendication 10,
dans lequel l'élément externe (3) comprend une saillie annulaire interne déformable élastiquement (11) permettant de maintenir solidement de façon étanche la partie de liaison (2a) de l'élément interne (2).
